# EUROPÄISCHE PATENTSCHRIFT

(11) **EP 1 450 078 B1**
(45) Veröffentlichungstag und Bekanntmachung des Hinweises auf die Patenterteilung: **03.04.2013**
(21) Anmeldenummer: 04001769.1
(22) Anmeldetag: 28.01.2004
(51) Int. Cl.: F16H 59/02, F16H 61/22

(54) **Schaltvorrichtung für ein automatisches Kraftfahrzeuggetriebe mit einer Sperrvorrichtung für den Wählhebel**
Shift device for an automatic transmission having a selector lever locking device
Dispositif de commande d'une boîte de vitesses automatique comprenant un système de verrouillage du levier de passage

(30) Priorität: 19.02.2003 DE 10307109
(43) Veröffentlichungstag der Anmeldung: 25.08.2004
(73) Patentinhaber: ZF Friedrichshafen AG, 80846 Friedrichshafen (DE)
(72) Erfinder: Giefer, Andreas, 49448 Lemförde (DE); Meyer, Jörg, 49419 Wagenfeld (DE); Otto, Dietmar, 01239 Dresden (DE)

(56) Entgegenhaltungen:
- EP-A1- 0 519 205
- DE-A1- 3 939 748
- DE-C1- 3 905 698
- US-A- 5 293 763
- US-A- 5 577 418

## Beschreibung

Die Erfindung betrifft eine Schaltvorrichtung zur Übertragung von Schaltbefehlen an ein automatisches Kraftfahrzeuggetriebe, mit: einem Gehäuse und/oder einem Rahmen, einem Wählhebel, der Schaltbefehle an das Kraftfahrzeuggetriebe überträgt und zumindest in einer Automatikgasse und vorzugsweise auch in einer Tiptronikgasse bewegbar ist, wobei der Wählhebel durch eine axial verschiebbare und manuell betätigbare Sperrstange in einer Parkposition P fixierbar ist, einer, mit dem Zündschloss gekoppelten, Sperrvorrichtung, die bei abgezogenem Zündschlüssel ein Entsperren des Wählhebels aus der Parkposition und bei außerhalb der Parkposition befindlichem Wählhebel ein Abziehen des Zündschlüssels verhindert.

Schaltvorrichtungen zur Übertragung von Schaltbefehlen an ein Kraftfahrzeuggetriebe, bei denen die Bewegung des Wählhebels durch eine Vorrichtung gesperrt werden kann, sind allgemein bekannt.

So wird bei diesen bekannten Schaltvorrichtungen der Wählhebel einer Automatikschaltung häufig mit einer Sperrvorrichtung versehen, die erst nach Betätigen einer Taste im Schaltknauf ein Schalten in eine andere Position zulässt. Dabei wird eine Sperrstange meistens im Innern des Schalthebels geführt. Sie wird durch die Taste betätigt und greift in eine Kulisse mit entsprechender Sperrkontur. So kann beispielsweise nur nach Drücken der Taste von der Schaltposition P (Parken) in die Schaltposition R (Rückwärts), und von R nach P und N (Neutral) nach R geschaltet werden. Eine besondere Bedeutung kommt dabei der Sperre von P nach R zu. Ein US-Standard verlangt ein sogenanntes Keylock-System. Nach diesem Standard müssen zwei Anforderungen erfüllt werden. Zum einen darf bei abgezogenem Zündschlüssel nicht mit dem Wählhebel aus der Schaltposition P herausgeschaltet werden, und zum anderen darf der Zündschlüssel nicht abgezogen werden, wenn der Wählhebel sich nicht in der Schaltposition P befindet.

Um diese Anforderungen zu erfüllen, wird der Sperrmechanismus häufig über einen Bowdenzug mit dem Zündschloss verbunden. Dabei ist der Bowdenzug über eine Mechanik mit dem Sperrmechanismus gekoppelt. Ist die Zündung nun nicht eingeschaltet, wird der Bowdenzug vom Zündschloss gesperrt und somit ist auch der Sperrmechanismus in seiner gesperrten Stellung. Ein Herausschalten aus P wird verhindert. Ist die Zündung eingeschaltet und der Wählhebel wird aus der Position P herausgeschaltet, so wird durch die Sperrstange und die Mechanik an dem Bowdenzug gezogen, wodurch im Zündschloss wiederum ein Mechanismus dafür sorgt, dass der Zündschlüssel nicht abgezogen werden kann. Das Ziehen am Bowdenzug in seine im Zündschloss sperrende Endlage erfolgt entweder nur durch das Drücken der Taste im Schaltknauf oder zum einen Teil durch Drücken der Taste und zum anderen Teil durch die Schaltbewegung des Wählhebels beim Herausschalten aus P. Dabei muss aber spätestens in Position R der Bowdenzug seine Endstellung erreicht haben. Danach muss dann sichergestellt werden, dass der Bowdenzug außerhalb der Position P immer in der gezogenen Stellung verbleibt. Üblicherweise geschieht dies auf zwei Art und Weisen.

Entweder ist ein Sperrhebel drehbar in der Schaltung gelagert. Dieser Sperrhebel weist zwei Hebelarme auf. Der eine Arm, auch Sperrarm genannt, des Hebels liegt an einer entsprechenden Gegenkontur der Sperrstange an, während der andere Arm, meist Zugarm genannt, mit dem Bowdenzug verbunden ist. Ist nun der Bowdenzug gesperrt, kann die Sperrstange den Sperrhebel nicht bewegen und somit ist der Wählhebel ebenfalls gesperrt. Wird nun die Zündung eingeschaltet und der Bowdenzug freigegeben, so wird durch Drücken der Knauftaste die Sperrstange bewegt, die wiederum den Sperrhebel bewegt, so dass der Bowdenzug gezogen wird. Um den Sperrhebel und somit den Bowdenzug in dieser Stellung zu halten, besitzt entweder der Sperrarm eine Verlängerung oder der Sperrhebel einen weiteren Arm, wobei deren Kontur mit Hilfe einer entsprechenden Gegenkontur am Wählhebel dafür sorgt, dass der Sperrhebel in der gezogenen Bowdenzugstellung in allen Schaltpositionen außer P verbleibt.

Die zweite bekannte Möglichkeit sicherzustellen, dass der Bowdenzug außerhalb der Position P immer in der gezogenen Stellung verbleibt, wird mit einem Sperrhebel realisiert, der wie oben beschrieben funktioniert. Dieser Sperrhebel hat allerdings keine Verlängerung mit entsprechender Gegenkontur am Wählhebel. Hier erfolgt das Halten des Sperrhebels in der gezogenen Bowdenzugstellung mittels eines federbelasteten Stützhebels, der selbstständig in die Haltestellung schwenkt und beim Zurückschalten des Wählhebels in die Position P durch den Wählhebel weggedrückt wird.

Nachteil der ersten Lösung ist, dass häufig aus kinematischen oder bauraumbedingten Gründen ein Sperrhebel mit einer Verlängerung und einer entsprechenden Gegenkontur am Wählhebel nicht untergebracht werden kann. Ein weiteres Problem ist bei einer Automatikschaltung mit zusätzlicher manueller Schaltgasse (Tiptronic-Schaltung) zu sehen. Dabei wird der Wählhebel aus der D-Position in eine zweite parallele Gasse bewegt. In diesem Fall muss sich die Gegenkontur am Wählhebel nicht nur in Richtung der Automatikgasse erstrecken, sondern auch noch quer dazu verlängert werden. Das stellt ein weiteres Bauraumproblem dar.

Ein Nachteil der zweiten Lösung ist, dass nicht sichergestellt werden kann, dass der Stützhebel auch immer in die Haltestellung schwenkt. Das Schwenken in die Haltestellung erfolgt ja nur durch die Federvorspannung und nicht durch eine Zwangsführung.

Aus der EP 0 519 205 A1 ist eine Verriegelungsvorrichtung zwischen einem Wählhebel eines Getriebes und einem Zündschloss eines Kraftfahrzeugs bekannt, bei der eine in einem Wählhebelblock drehbar gelagerte Sperrklinke ein am Wählhebel angeordnetes Nockenteil formschlüssig umfasst, wenn der Wählhebel in der Parksperrenstellung steht. Diese bekannte Verriegelungsvorrichtung ist jedoch konstruktiv aufwändig, benötigt eine Mehrzahl an Bauteilen sowie erheblichen Bauraum, und erlaubt zudem keine seitlichen Bewegungen des Wählhebels, wenn die Sperrklinke mit dem Nockenteil in Eingriff steht.

Es ist daher Aufgabe der Erfindung, eine Schaltvorrichtung für ein automatisches Kraftfahrzeuggetriebe mit einer Sperrvorrichtung für den Wählhebel vorzustellen, bei der die Sperrvorrichtung einen wesentlich kleineren Bauraum in der Schaltvorrichtung beansprucht, die Sperrung des Wählhebels zuverlässiger funktioniert und gleichzeitig der Schaltkomfort der Schaltvorrichtung verbessert wird.

Die Aufgabe der Erfindung wird durch eine Schaltvorrichtung mit den Merkmalen des Anspruches 1 gelöst. Vorteilhafte Weiterbildungen der Erfindung sind Gegenstand untergeordneter Patentansprüche.

Die Erfinder haben erkannt, dass die Sperrvorrichtung erheblich kompakter gestaltet werden kann, indem ebenfalls ein spezieller Sperrhebel zwischen Sperrstange und Bowdenzug verwendet wird. Dieser Sperrhebel wird aber nicht wie bisher durch eine Kontur am Wählhebel oder einen Stützhebel außerhalb der Schaltposition P in der gezogenen Bowdenzugstellung gehalten, sondern die Haltefunktion dieses Sperrhebels erfolgt mittels eines linear im Gehäuse geführten Sperrschiebers, der vom Wählhebel mitgenommen wird. Dieser Sperrschieber kann mindestens eine Führungsbahn aufweisen, auf der ein kleiner Ausleger des Sperrhebels außerhalb der P-Position aufliegt und der Sperrhebel somit gehalten wird. In der P-Position ist die Führungsbahn freigemacht, so dass der Sperrhebel beim Betätigen der Knauftaste und somit beim Bewegen der Sperrstange und Sperrhebel der Ausleger hier durchtauchen kann. Der Anfang der Führungsbahn kann mit einer schrägen Rampe versehen werden, so dass beim Drücken der Taste der Sperrhebel nur zu einem Teil bewegt wird, während die restliche Bewegung beim Schalten aus der P-Position heraus über die Rampe geschieht. Bei einer Tiptronic-Schaltung kann der Wählhebel beim Schwenken in die manuelle Gasse aus dem Mitnahmebereich des Sperrschiebers bewegt werden, so dass keine Reibungseinflüsse beim Tippen in der manuellen Gasse spürbar sind. Der Sperrschieber verbleibt in der D-Position.

Demgemäß schlagen die Erfinder vor, die bekannte Schaltvorrichtung zur Übertragung von Schaltbefehlen an ein automatisches Kraftfahrzeuggetriebe, mit einem Gehäuse und/oder einem Rahmen, einem Wählhebel, der Schaltbefehle an das Kraftfahrzeuggetriebe überträgt und zumindest in einer Automatikgasse und vorzugsweise auch in einer Tiptronikgasse bewegbar ist, wobei der Wählhebel durch eine axial verschiebbare und manuell betätigbare Sperrstange in einer Parkposition P fixierbar ist, einer, mit dem Zündschloss gekoppelten, Sperrvorrichtung, die bei abgezogenem Zündschlüssel ein Entsperren des Wählhebels aus der Parkposition und bei außerhalb der Parkposition befindlichem Wählhebel ein Abziehen des Zündschlüssels verhindert, dahingehend zu verbessern, dass die Sperrvorrichtung aus einem in Automatikgassenrichtung verschiebbaren Sperrschieber, der vom Wählhebel durchdrungen wird, und einem an dem Sperrschieber angreifenden Sperrhebel gebildet wird, wobei eine Kopplung zwischen Sperrstange und Sperrhebel vorgesehen ist.

Durch diese besondere Kombination von Sperrschieber und an diesen angepassten Sperrhebel kann die Sperrvorrichtung sehr kompakt ausgeführt werden. Es ist nicht mehr notwendig den Sperrhebel über aufwendige Konturen im Gehäuse der Schaltvorrichtung oder über Führungskonturen am Wählhebel in die gewünschte Position zu bewegen. Der Sperrschieber, der im Gehäuse der Schaltvorrichtung vorzugsweise eine lineare Bewegung ausführt, behindert somit die Bewegung des Wählhebels beim Wechseln der einzelnen Fahrstufen wesentlich weniger als eine Kontorführung. Hierdurch wird der Schaltkomfort des Wählhebel bei einer solchen Schaltvorrichtung weiter erhöht.

Eine besonders vorteilhafte Ausführung der Sperrvorrichtung ergibt sich, wenn der Sperrschieber und der Wählhebel jeweils eine Kontur aufweisen, die den Sperrschieber ausschließlich in der Automatikgasse an die Bewegung des Wählhebels koppelt. So kann der Sperrschieber eine Innenkontor aufweisen, die in Bewegungsrichtung des Wählhebels derart ausgeführt ist, dass der Sperrschieber mit dem Wählhebel in Kontakt steht. Wird der Wählhebel zum Beispiel in eine seitliche manuelle Schaltgasse (Tiptronic-Gasse) geschwenkt, so kann die Innenkontur des Sperrschieber Aussparungen aufweisen, so dass der Wählhebel nicht mehr in Kontakt mit dem Sperrschieber steht.

Aber auch die Kontur des Sperrhebels kann besonders ausgeführt sein. So kann der Sperrhebel gabelförmig ausgeführt werden. Die Zinken des gabelförmigen Sperrhebels können dann besonders platzsparend um den Wählhebel geführt sein. Auch die Kontor des Sperrhebels sollte an die Kontur des Sperrschieber angepasste sein. In der Schaltposition P sollte der Sperrhebel durch den Sperrschieber hindurchfahren können und dann in anderen Schaltpositionen sollte der Sperrhebel durch den Sperrschieber in einer das Zündschloss sperrenden Stellung gehalten werden.

Günstig ist es auch, wenn die Kopplung zwischen Sperrstange und Sperrhebel durch einen Querstift, der unter dem Sperrhebel angreift, gebildet wird. Dieser Querstift kann durch eine Bohrung im Wählhebel geführt werden und kann in einer Bohrung der Sperrstange befestigt sein. Durch den Sperrstift wird zum einen der Sperrhebel beim Drücken der Sperrstange, die ein Herausbewegen des Wählhebels aus der Schaltposition P (Parken) bewirken soll, nach oben mitbewegt. Hierdurch kann der Sperrhebel in eine Sperrstellung bewegt werden, in der das Zündschloss ein Abziehen des Zündschlüssels verhindert. Zum anderen ermöglicht dieser Querstift, dass der Sperrhebel der über dem Querstift angeordnet ist, dass in der Schaltposition Parken, die Sperrstange bei angezogenem Zündschlüssel nicht bewegt werden kann.

In einer komfortablen Ausführung der Schaltvorrichtung sind im Gehäuse Führungsschienen zu linearen Führung des Sperrschiebers angeordnet. In diesen Führungsschienen kann der Sperrschieber mit Hilfe von gelagerten Rollen bewegt werden. Hierdurch werden Reibungskräfte beim Bewegen des Sperrschiebers möglichst minimiert und somit die Kräfte zum Bewegen des Wählhebels reduziert.

Der Sperrschieber kann mindestens eine Rampe für mindestens einen Ausleger des Sperrhebels aufweisen. Durch diese Rampe kann der Ausleger des Sperrhebels beim Herausbewegen des Wählhebels aus der Schaltposition P ruckelfrei zur Führungsbahn des Sperrschiebers geleitet werden, wodurch ein Anheben des Sperrhebels unterstütz wird.

Es ist besonders vorteilhaft, dass der Auslegers des Sperrhebels im Kontaktbereich zum Sperrschieber eine Rolle aufweist. Hierdurch können die Kräfte am Wählhebel reduziert werden, wenn der Sperrhebel die Rampe des Sperrschiebers hinaufrollt. Außerdem ist durch die Rolle eine harmonische Bewegung des Sperrhebels auf der Führungsbahn des Sperrschieber -während der Relativbewegung Sperrschieber und Sperrhebel - gewährleistet.

Außerhalb der Schaltposition P sollte der Sperrhebel durch den Sperrschieber gehalten werden. Da Aber der Sperrschieber in der Automatikgasse durch den Wählhebel Mitgeführt wird kann es zu Reibungen im Kontaktbereich zwischen Sperrhebel und Sperrschieber kommen. Um die Reibungskräfte während der Bewegung des Wählhebels zu minimieren, ist es günstig, wenn der Sperrschieber mindestens eine Führungsbahn aufweist. Auf dieser Führungsbahn, die zum Beispiel eine Teflonbeschichtung aufweisen kann und/oder gelagerte Rollenelemente, kann eine Relativbewegung zwischen dem Sperrschieber und dem "sperrenden" Sperrhebel ermöglicht werden..

Eine kostengünstige Ausführung der Kopplung zwischen Zündschloss und Sperrhebel kann durch einen Bowdenzug realisiert werden. Dieser Bowdenzug gewährleistet eine zuverlässige mechanische Koppelverbindung zwischen der Stellung des Zündschlüssels im Zündschloss und der Stellung des Sperrhebels.

Weitere Merkmale und Vorteile der Erfindung ergeben sich aus den Unteransprüchen und der nachfolgenden Beschreibung bevorzugter Ausführungsbeispiele unter Bezugnahme auf die Zeichnungen.

Die Figuren zeigen im Einzelnen:
- Figur 1:: Perspektivische Ansicht auf eine Schaltvorrichtung für ein Kraftfahrzeuggetriebe mit geschlossenem Gehäuse und einer Sperrvorrichtung für den Wählhebel;
- Figur 2:: Perspektivische Ansicht auf die Schaltvorrichtung aus Figur 1 mit geöffnetem Gehäuse;
- Figur 3:: Seitenansicht auf eine Schaltvorrichtung mit Sperrvorrichtung für den Wählhebel;
- Figur 4:: Perspektivische Detailansicht auf die Sperrvorrichtung im Gehäuse;
- Figur 5:: Seitenansicht der Sperrvorrichtung, wobei der Wählhebel in der Position P (Parken) fixiert ist;
- Figur 6:: Sperrvorrichtung aus Figur 5 aus einer Ansicht vom oberen Ende des Wählhebels;
- Figur 7:: Seitenansicht auf den Wählhebel und die Sperrvorrichtung, wobei der Wählhebel, der sich gerade in der Schaltposition P (Parken) befindet, entsperrt wird;
- Figur 8:: Wählhebel und die Sperrvorrichtung aus Figur 7 aus einer Ansicht vom oberen Ende des Wählhebels;
- Figur 9:: Seitenansicht auf den Wählhebel und die Sperrvorrichtung, wobei der Wählhebel in Schaltposition D (Drive) ist und der Sperrhebel auf der Führungsbahn gehalten wird;
- Figur 10:: Wählhebel und die Sperrvorrichtung aus Figur 9 in einer perspektivischer Ansicht schräg von oben.

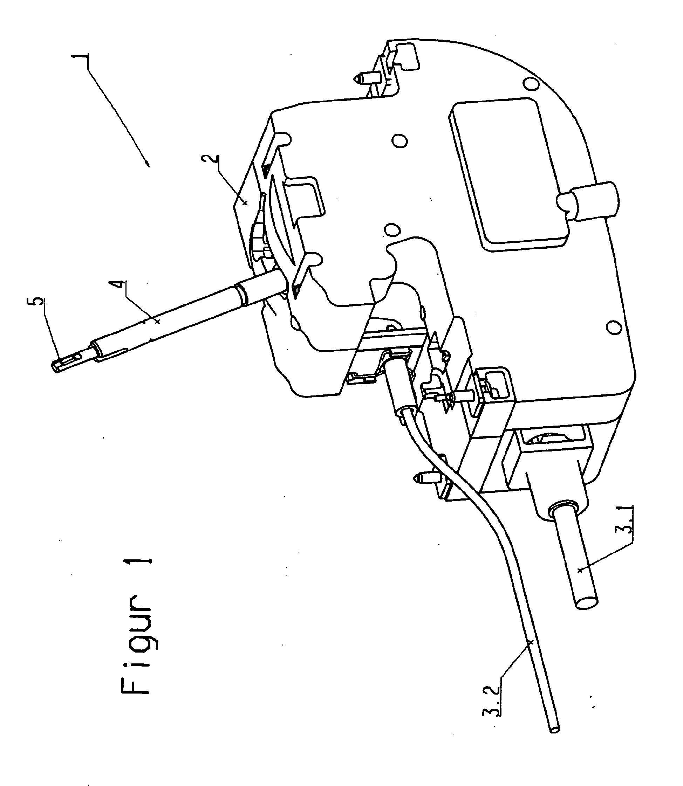

Die Figur 1 zeigt eine perspektivische Ansicht auf eine Schaltvorrichtung 1 mit geschlossenem Gehäuse 2 für ein Kraftfahrzeuggetriebe. Diese besondere Schaltvorrichtung 1 weist eine Sperrvorrichtung für den Wählhebel 4 auf. Der Mechanismus der Sperrvorrichtung befindet sich im Inneren des Gehäuses 2 und ist in Figur 1 nicht sichtbar. Zusätzlich zum Bowdenzug 3.1, über den die Schaltpositionen vom Wählhebel 4 auf das Kraftfahrzeuggetriebe übertragen werden, ist ein weiterer Bowdenzug 3.2 vorhanden. Der Bowdenzug 3.2 stellt eine Verbindung des Wählhebels 4 zum Zündschloss dar und wird über eine Mechanik mit dem Sperrmechanismus gekoppelt. Ist die Zündung des Kraftfahrzeuges nun nicht eingeschaltet - also der Zündschlüssel beispielsweise abgezogen -, wird der Bowdenzug 3.2 vom Zündschloss gesperrt und somit ist auch der Sperrmechanismus in seiner gesperrten Stellung. Ein Herausschalten des Wählhebels 4 aus der Schaltposition P wird verhindert. Ist die Zündung des Kraftfahrzeuges eingeschaltet - also der Zündschlüssel gedreht - und wird der Wählhebel 4 aus der Schaltposition P herausgeschaltet, so wird durch die Sperrstange 5, die innerhalb des Wählhebels 4 geführt wird, die Mechanik an dem Bowdenzug 3.2 gezogen, wodurch im Zündschloss wiederum ein Mechanismus dafür sorgt, dass der Zündschlüssel nicht abgezogen werden kann.

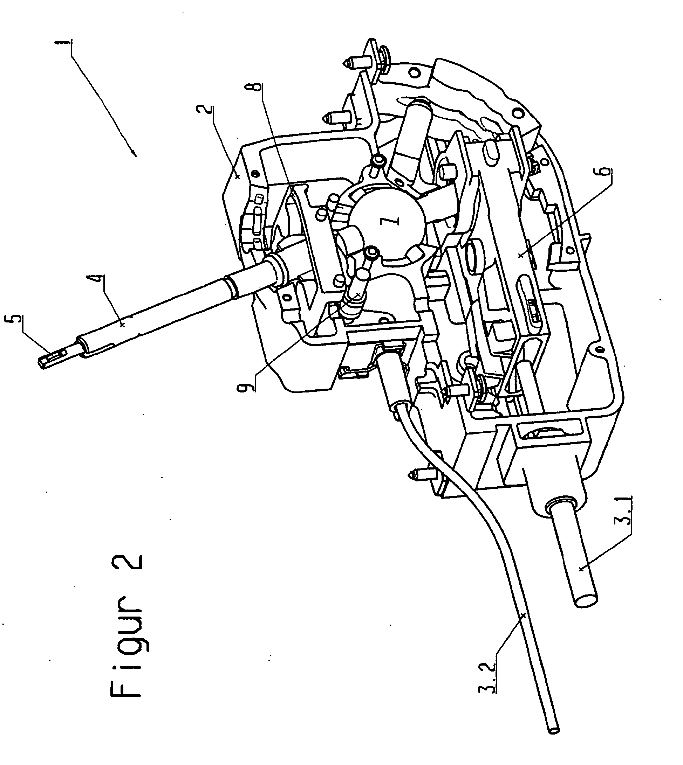

Die Figur 2 zeigt eine Ansicht auf die Schaltvorrichtung 1 aus Figur 1, aus der selben Perspektive, jedoch ist im Unterschied zu Figur 1 ein Deckel des Gehäuses 2 demontiert. Hierdurch kann der Schaltmechanismus zum Schalten der Fahrzeuggetriebepositionen (P, N, R und D) und der Mechanismus zum Sperren des Wählhebels 4 besser eingesehen werden. Der Wählhebel 4 ist über ein Kugelgelenklager 7 in zwei Schaltgassen, zum Beispiel in der Schaltgasse für Schaltprogramme (P, N, R und D) und in der Schaltgasse für manuelle Schaltbefehle (Tiptronic) bewegbar.

Der Schaltmechanismus zum Schalten der Fahrzeuggetriebepositionen (P, N, R und D) besteht im wesentlichen aus einem linear bewegbaren Schaltschlitten 6. Dieser Schaltschlitten 6 ist unterhalb des Kugelgelenklagers 7 mit dem unteren Ende des Wählhebels 4 verbunden. Außerdem ist der Schaltschlitten 6 mit dem Bowdenzug 3.1 verbunden, wodurch eine Übertragung der Schaltbefehle vom Wählhebel 4 zum Kraftfahrzeuggetriebe möglich ist.

Der Mechanismus zum Sperren des Wählhebels 4, der oberhalb des Kugelgelenklagers 7 angeordnet ist, weist einen Sperrschieber 8 auf. Dieser Sperrschieber 8 ist mit dem Wählhebel 4 verbunden. Mit Hilfe eines Bowdenzugs 3.2, der zum Zündschloss führt, kann ein Sperrhebel 9 bewegt werden. Dieser Sperrhebel 9 kann je nach Stellung, zum einen die Bewegung des Wählhebels 4 ermöglichen und zum anderen den Wählhebel 4 in der Schaltposition P (Parken) fixieren.

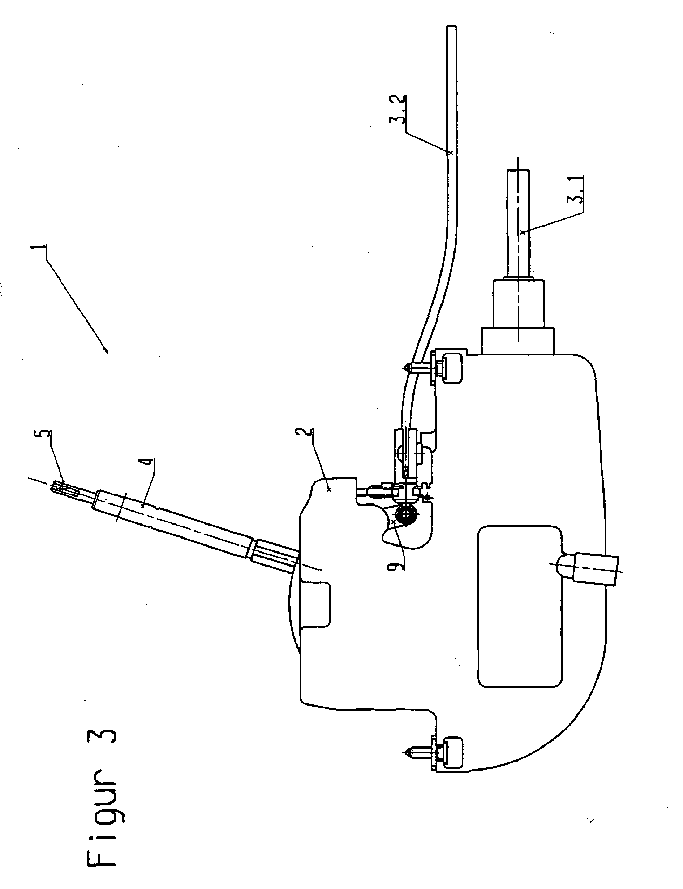

Die Figur 3 zeigt eine Seitenansicht der Schaltvorrichtung 1 für ein Kraftfahrzeuggetriebe mit Sperrvorrichtung für den Wählhebel 4. In Figur 3 ist gut die Befestigung des Bodenzuges 3.2, der zum Zündschloss führt, am Gehäuse 2 der Schaltvorrichtung 1 zu erkennen.

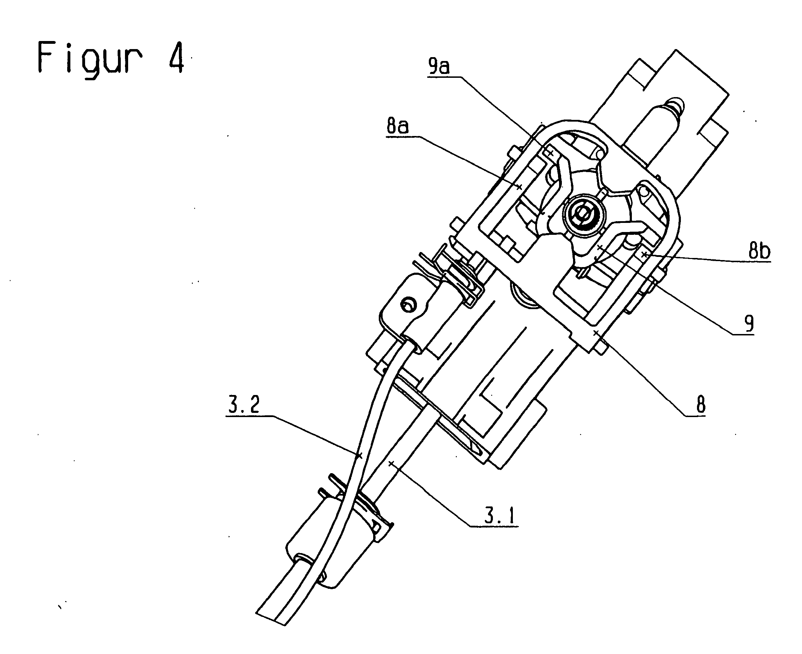

Die Figur 4 zeigt eine perspektivische Detailansicht von oben auf die Sperrvorrichtung im Gehäuse 2 der Schaltvorrichtung 1. Aus dieser Position ist besonders gut der gabelförmige Sperrhebel 9 zu erkennen. Dieser Sperrhebel 9 weist an den beiden Enden kleine Ausleger 9a auf. Der Sperrhebel ist mit dem Bowdenzug 3.2, der zum Zündschloss des Kraftfahrzeuges führt, verbunden. Weiterhin ist in dieser Ansicht auch der Sperrschieber 8 zu erkennen. Dieser Sperrschieber 8 ist so ausgebildet, dass es möglich ist, den Sperrhebel 9 mit den Auslegern 9a durch den Sperrschieber 8 hindurch zu bewegen, wenn der Sperrhebel 9 nach oben bewegt wird (in Figur 4 aus der Zeichnungsebene heraus). Der Sperrschieber 8 besitzt zwei Rampen 8b, die die Ausleger 9a und somit den Sperrhebel 9 nach oben führen. Weiterhin sind am Sperrschieber 8 zwei Führungsbahnen 8a angeordnet, die eine Relativbewegung zwischen Sperrschieber 8 und Sperrhebel 9 - während des Bewegens des Wählhebels 4 ermöglichen - ermöglichen.

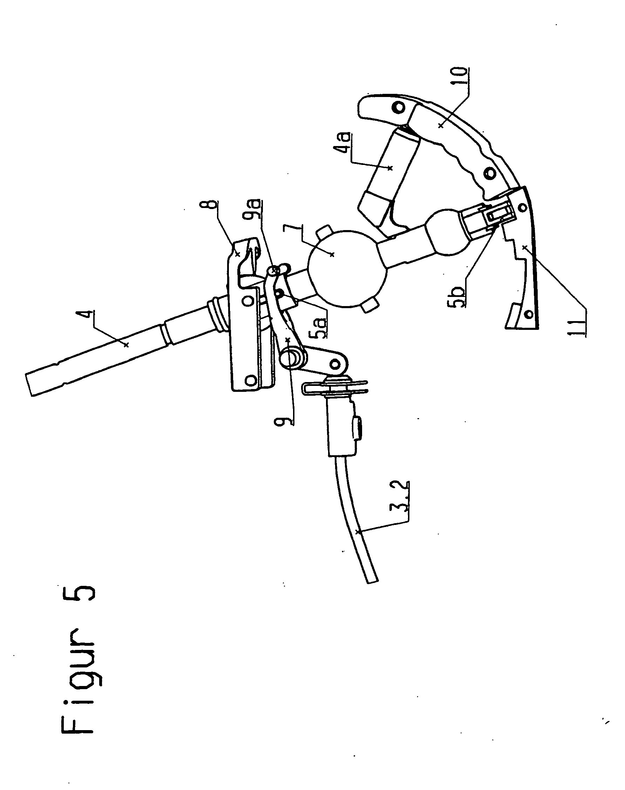

Die Figur 5 zeigt einer Seitenansicht die Sperrvorrichtung, wobei der Wählhebel 4 in der Position P (Parken) fixiert ist. Zur Befestigung des Wählhebels 4 in dieser Schaltposition greift am unteren Ende des Wählhebels 4 eine Sperrnase 5b, die mit der Sperrstange verbunden ist, in eine Sperrkurvatur 11 ein. Die Sperrstange ist in Figur 5 nicht sichtbar, da die Sperrstange innerhalb des Wählhebels 4 verläuft. Ist in der Schaltposition P der Zündschlüssel am Fahrzeug abgezogen, so wird über den Bowdenzug 3.2 der Sperrhebel 9 in dieser Stellung gehalten. Der Sperrhebel 9 "sperrt" einen Stift 5a, der durch eine Bohrung mit der Sperrstange verbunden ist. Hierdurch kann bei abgezogenen Zündschlüssel der Wählhebel 4 nicht aus der Schaltposition P (Parken) bewegt werden. Durch das Sperren des Stiftes 5a kann die Sperrstange nicht bewegt werden und somit auch nicht die Sperrnase 5b am unteren Ende des Wählhebels 4 aus der Sperrkurvatur 11 ausgelöst werden.

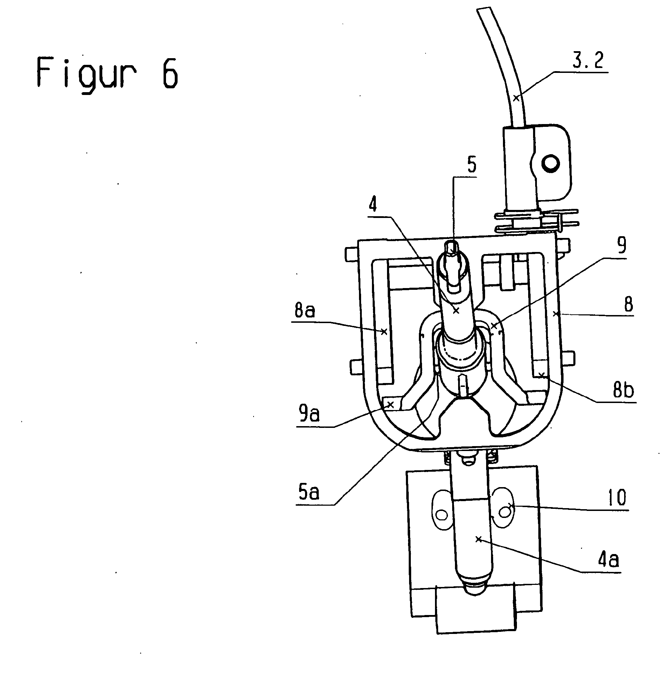

Die Figur 6 zeigt die Sperrvorrichtung aus Figur 5, aus der Sicht vom oberen Ende des Wählhebels 4 gesehen. Der Wählhebel 4 befindet sich auch hier in der Schaltposition P (Parken). In dieser Ansicht ist gut zu erkennen, wie der gabelförmige Sperrhebel 9 auf dem Stift 5a, der durch eine Bohrung im Wählhebel 4 mit der Sperrstange 5 verbunden ist, aufliegt.

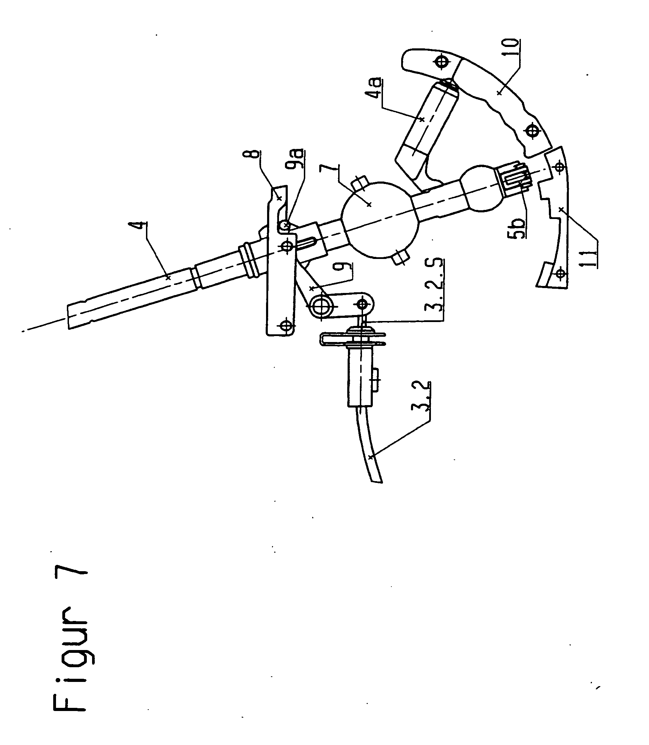

Die Figur 7 zeigt eine Seitenansicht auf den Wählhebel 4 und die Sperrvorrichtung, wobei der Wählhebel 4, der sich gerade in der Schaltposition P (Parken) befindet, entsperrt wird. Wird der Zündschlüssel im Schloss des Kraftfahrzeuges gedreht, so wird über den Seilzug 3.2.S im Bowdenzug 3.2 der Sperrhebel 9 nach oben bewegt. Jetzt liegt der Sperrhebel 9 nicht mehr auf dem Stift durch die Sperrstange (beide nicht in Figur 7 erkennbar) auf. Hierdurch wird die Bewegung der Sperrstange im Inneren des Wählhebel 4 freigegeben. In Figur 7 ist zu sehen, dass die Sperrnase 5b am unteren Ende der Sperrstange aus der Einrastposition der Sperrkurvatur 11 herausgezogen ist. Der Wählhebel 4 kann nun in eine andere Schaltposition oder in die manuelle Schaltgasse bewegt werden. Zur komfortableren Schaltung der Hebelpositionen ist am Ende des Wählhebels 4 ein Führungselement 4a vorgesehen. Dieses Führungselement 4a greift in einer Führungskurvatur 10 ein und ermöglicht ein gezielteres Auffinden der Schaltpositionen.

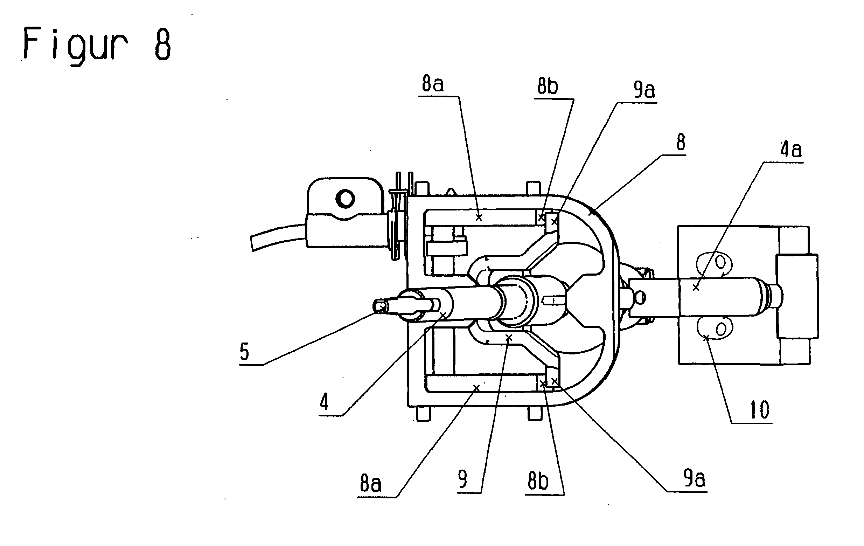

Die Figur 8 zeigt den Wählhebel 4 und die Sperrvorrichtung aus Figur 7 aus einer anderen Ansicht vom oberen Ende des Wählhebels 4 aus gesehen. Der angehobene Sperrhebel 9 ist deutlich erkennbar. Die beiden Ausleger des Sperrhebels 9a sind bereits in Kontakt mit der Rampe 8b des Sperrschiebers 8. Wird der Wählhebel 4 in Figur 8 nach rechts bewegt, so können die Ausleger des Sperrhebel 9a entlang der Rampe 8b des Sperrschlittens 8 hochgleiten. Wird der Wählhebel 4 weiter nach rechts bewegt, so werden die beiden Ausleger des Sperrhebels 9a entlang der Führungsbahnen 8a des Sperrschlittens 8 bewegt. Der Sperrschlitten 8 mit den Führungsbahnen 8a verhindert also, dass während des Schaltens des Wählhebels 4 der Sperrhebel 9 durch den Seilzug des Bowdenzugs 3.2.S nach unten gezogen wird. Das heißt, dass während des Schaltens des Wählhebels 4 der Zündschlüssel nicht aus dem Zündschloss abgezogen werden.

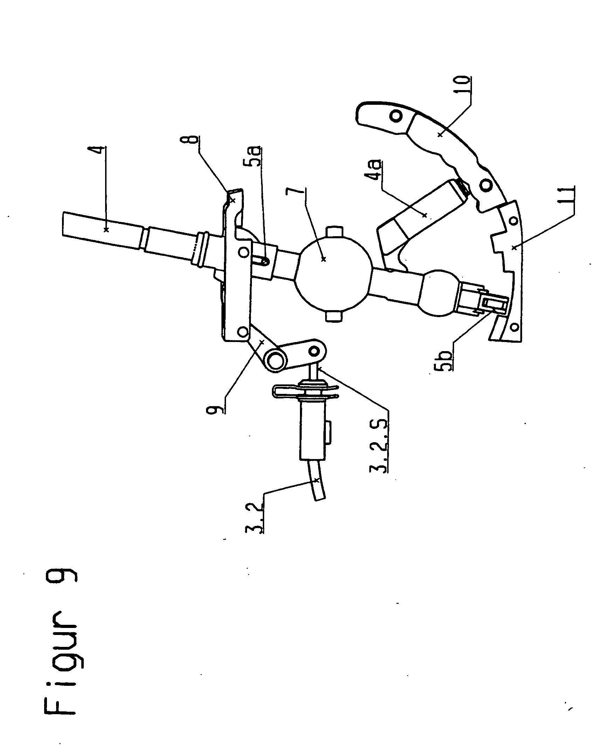

Die Figur 9 zeigt eine Seitenansicht auf den Wählhebel 4 und die Sperrvorrichtung, wobei der Wählhebel 4 in der Schaltposition D (Drive) ist und der Sperrhebel 9 auf der Führungsbahn gehalten wird. Diese gesperrte Position des Sperrhebel 9 wird durch den Sperrschlitten 8 gehalten. Ein Abziehen des Zündschlüssels ist in dieser Schaltposition nicht möglich.

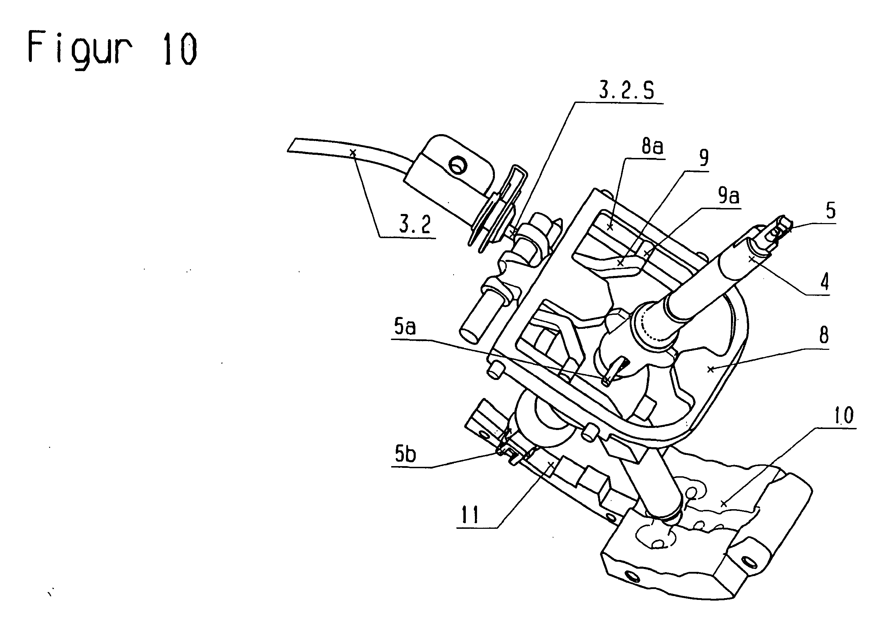

Die Figur 10 zeigt den Wählhebel 4 und die Sperrvorrichtung aus Figur 9 in einer perspektivischer Ansicht schräg von oben. Der Wählhebel 4 befindet sich gerade in der Schaltposition D (Drive). In dieser Ansicht ist besonders gut der Sperrhebel 9 zu erkennen, dessen Ausleger 9a durch die Führungsbahn 8a des Sperrschlittens 8 gehalten werden.

Insgesamt wird also durch die Erfindung eine Schaltvorrichtung für ein automatisches Kraftfahrzeuggetriebe mit einer Sperrvorrichtung für den Wählhebel zur Verfügung gestellt, bei der die Sperrvorrichtung einen wesentlich kleineren Bauraum in der Schaltvorrichtung beansprucht, die Sperrung des Wählhebels zuverlässiger funktioniert und gleichzeitig der Schaltkomfort der Schaltvorrichtung hinsichtlich der benötigten Handkräfte verbessert wird.

Es versteht sich, dass die vorstehend genannten Merkmale und die Merkmale der Ansprüche nicht nur in den jeweils angegebenen Kombinationen, sondern auch in anderen Kombinationen oder in Alleinstellung verwendbar sind, ohne den Rahmen der Erfindung zu verlassen. Ebenso liegt es im Rahmen der Erfindung eine mechanische Umkehr der Funktionen der einzelnen mechanischen Elemente der Erfindung zu bewirken.

### BEZUGSZEICHENLISTE:

- 1: Schaltvorrichtung
- 2: Gehäuse der Schaltvorrichtung
- 3.1: Bowdenzug zur Schaltung von Getriebepositionen
- 3.2: Bowdenzug zum Zündschloss
- 3.2.S: Zugseil des Bowdenzugs 3.2
- 4: Wählhebel
- 4a: Führungselement des Wählhebels
- 5: Sperrstange
- 5a: Stift durch Sperrstange
- 5b: Sperrnase der Sperrstange
- 6: Schaltschlitten
- 7: Kugelgelenklager
- 8: Sperrschieber
- 8a: Führungsbahn
- 8b: Rampe
- 9: Sperrhebel
- 9a: Ausleger des Sperrhebels
- 10: Führungskurvatur für den Wählhebel
- 11: Sperrkurvatur für den Wählhebel und die Sperrstange

## Patentansprüche

1. Schaltvorrichtung (1) zur Übertragung von Schaltbefehlen an ein automatisches Kraftfahrzeuggetriebe, mit:
- einem Gehäuse (2) und/oder einem Rahmen,
- einem Wählhebel (4), der Schaltbefehle an das Kraftfahrzeuggetriebe überträgt und zumindest in einer Automatikgasse und vorzugsweise auch in einer Tiptronikgasse bewegbar ist, wobei der Wählhebel (4) durch eine axial verschiebbare und manuell betätigbare Sperrstange (5) in einer Parkposition P fixierbar ist,
- einer, mit dem Zündschloss gekoppelten, Sperrvorrichtung, die bei abgezogenem Zündschlüssel ein Entsperren des Wählhebels (4) aus der Parkposition und bei außerhalb der Parkposition befindlichem Wählhebel (4) ein Abziehen des Zündschlüssels verhindert,
wobei die Sperrvorrichtung aus einem in Automatikgassenrichtung verschiebbaren Sperrschieber (8), der vom Wählhebel (4) durchdrungen wird, und einem an dem Sperrschieber (8) angreifenden Sperrhebel (9) gebildet wird, wobei eine Kopplung zwischen Sperrstange (5) und Sperrhebel (9) vorgesehen ist,
**dadurch gekennzeichnet, dass**
der Sperrhebel (9) bei außerhalb der Parkposition befindlichem Wählhebel (4) mittels Anlage des Sperrhebels (9) an einer Führungsbahn (8a) des Sperrschiebers (8) in einer das Abziehen des Zündschlüssels verhindernden Relativposition blockiert ist.

2. Schaltvorrichtung (1) nach dem voranstehenden Patentanspruch 1,
**dadurch gekennzeichnet, dass**
der Sperrschieber (8) und der Wählhebel (4) jeweils eine Kontur aufweisen, die den Sperrschieber (8) ausschließlich in der Automatikgasse an die Bewegung des Wählhebels (4) koppelt.

3. Schaltvorrichtung (1) nach einem der voranstehenden Patentansprüche 1 und 2,
**dadurch gekennzeichnet, dass**
die Kopplung zwischen Sperrstange (5) und Sperrhebel (9) durch einen Querstift (5a), der unter dem Sperrhebel (9) angreift, gebildet wird.

4. Schaltvorrichtung (1) nach einem der voranstehenden Patentansprüche 1 bis 3,
**dadurch gekennzeichnet, dass**
im Gehäuse (2) Führungsschienen zur linearen Führung des Sperrschiebers (8) angeordnet sind.

5. Schaltvorrichtung (1) nach einem der voranstehenden Patentansprüche 1 bis 4,
**dadurch gekennzeichnet, dass**
der Sperrschieber (8) mindestens eine Rampe (8b) für mindestens einen Ausleger (9a) des Sperrhebels (9) aufweist.

6. Schaltvorrichtung (1) nach dem voranstehenden Patentanspruch 5,
**dadurch gekennzeichnet, dass**
der Ausleger (9a) des Sperrhebels (9) im Kontaktbereich zum Sperrschieber (8) eine Rolle aufweist.

7. Schaltvorrichtung (1) nach einem der voranstehenden Patentansprüche 1 bis 6,
**dadurch gekennzeichnet, dass**
dass der Sperrschieber (8) mindestens eine Führungsbahn (8a) aufweist

8. Schaltvorrichtung (1) nach einem der voranstehenden Patentansprüche 1 bis 7,
**dadurch gekennzeichnet, dass**
die Kopplung zwischen Zündschloss und Sperrhebel (9) durch einen Bowdenzug (3.2) realisiert ist.

## Claims

1. Shift device (1) for transmitting shift commands to an automatic motor vehicle transmission, having:
- a housing (2) and/or a frame,
- a selector lever (4) which transmits shift commands to the motor vehicle transmission and can be moved at least in an automatic shift gate and preferably also in a tiptronic shift gate, wherein the selector lever (4) can be secured in a parking position P by an axially displaceable and manually actuable ratchet (5),
- a locking device which is coupled to the ignition lock and which, when the ignition key is withdrawn, prevents the selector lever (4) from being released from the parking position, and prevents the ignition key from being withdrawn when the selector lever (4) is located outside the parking position,
wherein the locking device is formed from a locking slide (8), which can be displaced in the direction of the automatic shift gate and which is penetrated by the selector lever (4), and a locking lever (9) which acts on the locking slide (8), wherein a coupling is provided between the ratchet (5) and the locking lever (9),
**characterized in that**
when the selector lever (4) is located outside the parking position the locking lever (9) is blocked by abutment of the locking lever (9) against a guide track (8a) of the locking slide (8), in a relative position preventing the withdrawal of the ignition key.

2. Shift device (1) according to the preceding Patent Claim 1,
**characterized in that**
the locking slide (8) and the selector lever (4) each have a contour which couples the locking slide (8) to the movement of the selector lever (4) exclusively in the automatic shift gate.

3. Shift device (1) according to one of the preceding Patent Claims 1 and 2,
**characterized in that**
the coupling between the ratchet (5) and the locking lever (9) is formed by a lateral pin (5a) which engages under the locking lever (9).

4. Shift device (1) according to one of the preceding Patent Claims 1 to 3,
**characterized in that**
guide rails for linearly guiding the locking slide (8) are arranged in the housing (2).

5. Shift device (1) according to one of the preceding Patent Claims 1 to 4,
**characterized in that**
the locking slide (8) has at least one ramp (8b) for at least one extension arm (9a) of the locking lever (9) .

6. Shift device (1) according to the preceding Patent Claim 5,
**characterized in that**
the extension arm (9a) of the locking lever (9) has a roller in the region in contact with the locking slide (8).

7. Shift device (1) according to one of the preceding Patent Claims 1 to 6,
**characterized in that**
the locking slide (8) has at least one guide track (8a) .

8. Shift device (1) according to one of the preceding Patent Claims 1 to 7,
**characterized in that**
the coupling between the ignition lock and the locking lever (9) is implemented by means of a Bowden cable (3.2).

## Revendications

1. Dispositif de commutation (1) pour transmettre des ordres de commutation à une boîte de vitesses automatique d'un véhicule automobile, comprenant :
- un boîtier (2) et/ou un cadre,
- un levier de sélection (4) qui transmet des ordres de commutation à la boîte de vitesses du véhicule automobile et qui peut être déplacé au moins dans une voie automatique et de préférence aussi dans une voie Tiptronic, le levier de sélection (4) pouvant être fixé par une tige de verrouillage (5) déplaçable axialement et à commande manuelle dans une position de stationnement P,
- un dispositif de verrouillage accouplé à l'interrupteur d'allumage, qui, lorsque la clé d'allumage est enlevée, empêche un déverrouillage du levier de sélection (4) de la position de stationnement et lorsque le levier de sélection (4) se trouve hors de la position de stationnement, empêche un retrait de la clé d'allumage,
le dispositif de verrouillage étant formé d'un coulisseau de verrouillage (8) déplaçable dans une direction de voie automatique, qui est traversé par le levier de sélection (4), et d'un levier de verrouillage (9) venant en prise avec le coulisseau de verrouillage (8), un accouplement entre la tige de verrouillage (5) et le levier de verrouillage (9) étant prévu,
**caractérisé en ce que**
le levier de verrouillage (9), lorsque le levier de sélection (4) se trouve dans la position de stationnement, est bloqué par l'application du levier de verrouillage (9) contre une piste de guidage (8a) du coulisseau de verrouillage (8) dans une position relative empêchant le retrait de la clé d'allumage.

2. Dispositif de commutation (1) selon la revendication précédente 1,
**caractérisé en ce que**
le coulisseau de verrouillage (8) et le levier de sélection (4) présentent chacun un contour qui accouple le coulisseau de verrouillage (8) exclusivement dans la voie automatique au mouvement du levier de sélection (4).

3. Dispositif de commutation (1) selon l'une quelconque des revendications précédentes 1 et 2,
**caractérisé en ce que**
l'accouplement entre la tige de verrouillage (5) et le levier de verrouillage (9) est formé par une goupille transversale (5a) qui vient en prise sous le levier de verrouillage (9).

4. Dispositif de commutation (1) selon l'une quelconque des revendications précédentes 1 à 3,
**caractérisé en ce que**
dans le boîtier (2) sont disposés des rails de guidage pour le guidage linéaire du coulisseau de verrouillage (8).

5. Dispositif de commutation (1) selon l'une quelconque des revendications précédentes 1 à 4,
**caractérisé en ce que**
le coulisseau de verrouillage (8) présente au moins une rampe (8b) pour au moins un bras (9a) du levier de verrouillage (9).

6. Dispositif de commutation (1) selon la revendication précédente 5,
**caractérisé en ce que**
le bras (9a) du levier de verrouillage (9) présente un galet dans la région de contact avec le coulisseau de verrouillage (8).

7. Dispositif de commutation (1) selon l'une quelconque des revendications précédentes 1 à 6,
**caractérisé en ce que**
le coulisseau de verrouillage (8) présente au moins une piste de guidage (8a).

8. Dispositif de commutation (1) selon l'une quelconque des revendications précédentes 1 à 7,
**caractérisé en ce que**
l'accouplement entre l'interrupteur d'allumage et le levier de verrouillage (9) est réalisé par un câble Bowden (3.2).
